# EUROPEAN PATENT SPECIFICATION

(11) **EP 4 431 263 B1**
(45) Date of publication and mention of the grant of the patent: **22.04.2026**
(21) Application number: 23382251.9
(22) Date of filing: 17.03.2023
(51) Int. Cl.: B29C 63/04, B29L 31/00

(54) **PART COATING SYSTEM**
TEILBESCHICHTUNGSSYSTEM
SYSTÈME DE REVÊTEMENT DE PIÈCES

(43) Date of publication of application: 18.09.2024
(73) Proprietor: Barberan Latorre, Jesús Francisco, 08860 Castelldefels (Barcelona) (ES)
(72) Inventor: Barberan Latorre, Jesús Francisco, 08860 Castelldefels (Barcelona) (ES)
(74) Representative: Plasseraud IP

(56) References cited:
- ES-T3- 2 527 574

## Description

### Technical field

The present invention relates to the industry dedicated to the coating of parts, for example, for covering profiles, slats, panels, boards or the like with a covering material in the form of a tape or band, such as a plate or a protective or decorative sheet, and more specifically to a system for readjusting tool supports and/or replacing said tools that apply the covering material on a new part with a different geometry introduced into a part coating machine.

### State of the art

Part covering machines that are used to coat parts, for example, profiles for applications mainly relating to decoration, such as furniture, door profiles, windows, and the like, are known. Corresponding to a surface finishing process for parts usually made of wood or derivatives, aluminium, PVC, etc. In machines of this type, the parts are conveyed in a longitudinal direction along the conveyor path so that, by using adhesive glues, a covering is made with continuous sheets or with discontinuous sheets made of different materials such as paper, PVC, CPL, etc. In this way, a part can be given any desired appearance and even achieve some characteristics based on the type and design of the covering used.

In these machines, along the conveyor path of the part are a plurality of supports, on which tools are supported, preferably in the form of interchangeable pressure rollers. After the application of an adhesive on the covering sheet and/or on the part, and its subsequent placement on top of said part, the part already with the sheet passes through the rollers so that the sheet is extended over said profile by means of the pressure rollers. In each position of the tools, the circumstances and inclinations of the axis of the pressure rollers must be adjusted according to the geometry of the profile to be processed for correctly and progressively adapting the covering material to the shape of said part, the surface of the profiled roller being in correspondence with the corresponding surface portion of the part.

Therefore, when changing to a different part to be covered, in addition to providing a new position by readjusting the supports, it is usually necessary to replace the pressure rollers with ones that have different profile shapes or different hardness qualities, etc.

In general, this reconfiguration requires the exchange and adjustment of a good number of pressure rollers by means of adjusting their support, meaning that this reconfiguration is quite time consuming and entails long periods of inactivity and therefore high costs. Furthermore, this reconfiguration requires the expertise and experience of an operator who is familiar with the matter and knowledgeable about strategies to achieve a correct covering.

To solve this problem and reduce reconfiguration times, an existing solution is the one proposed by the document ES2527574T3 which discloses a device to retrofit profile covering machines that provide the operator with a screw conveyor, or a static magazine that provides a support robotic, of the corresponding roller in order to change the roller according to the geometry of the new profile introduced in the machine. Furthermore, it has a program that by means of an algorithm selects the corresponding pressure roller and the location of the same based on the given profile geometry that can be introduced in the form of CAD data. In this way, the operator reduces readjustment times by having the tools in their position. In addition, the device comprises signalling devices to indicate to the operator in which location the roller must be placed, and even the data processing system determines the necessary adjustment of the plurality of supports and explains to the operator how said support must be adjusted.

However, this system still requires the action of an operator which slows down the process and can entail adjustment errors in the reconfiguration if the operator is inexperienced. Furthermore, the situation arises in which there are certain adjustments that can only be made by an experienced operator and that this system would not take into account in the reconfiguration determination software, resulting in defective parts that increase production costs.

In view of the described disadvantages or limitations presented by the currently existing solutions, a solution that allows automating the process for retrofitting covering machines, in an economically viable manner, is necessary, considering that at present the configuration of machines of this type is completely manual when a new part with a different geometry is introduced, in order to minimise reconfiguration downtimes while providing versatility to allow and process the readjustments made by an experienced operator, reducing defective parts.

### Object of the invention

To meet this objective and solve the technical problems discussed so far, in addition to providing additional advantages that can be derived later, the present invention provides a part covering system according to claim 1.

Disengage is understood to mean the unlocking of the movements of the support so that it can be adjusted by applying force, but without fully unlocking, so that it can be actuated in its adjustment movements.

Preferably, the disengagement will be selective, in other words, the movements of the support will be unlocked based on the adjustment needs.

This motorised actuator allows automation that reduces the reconfiguration times of the plurality of positioning supports when the geometry of the part or profile introduced in the covering system is changed, with controlled cost increases compared to conventional systems, and unlike other embodiments in which robotic positioning supports of the tool are used and which results in a more expensive installation to manufacture and maintain. Given the database stored in the memory of the system with the correspondence between part geometry and support location and positioning, and/or tool to be modified, the control means determine the reconfiguration parameters and send the relevant orders so that the motorised actuator reconfigures the plurality of supports based on the geometry of the new part introduced.

This automation is possible since said motorised actuator is configured to receive orders from the control means, and it is further configured to couple to the corresponding support by disengaging it so that it can be repositioned, to subsequently re-engage the support and uncouple said motorised actuator, and according to the positioning orders, the motorised actuator acts on the plurality of supports that is necessary, safely and efficiently reconfiguring the moulding train, formed by the positioning supports.

In this way, the need for an operator to intervene is eliminated, with the resulting reduction in time and positioning errors. In addition, it allows the covering machine models currently on the market to be easily adapted.

According to the invention, the positioning supports comprise disengaging means. The disengaging means may be, for example, electric brakes or hydraulic means. Therefore, the function of these disengaging means is to lock the movements of the positioning support, but by being configured to be actuated by the motorised actuator according to the orders given by the control means, and/or by receiving a signal emitted by the control means for its disengagement.

According to a feature of the invention, the motorised actuator can be moved to each of the positioning supports for its positioning reconfiguration and/or change of location according to the orders given by the control means.

The actuator will be movable, preferably by guides, which make it easier to identify the positions of the supports, and allow the motorised actuator to move precisely to each support, to couple to the same and, after disengaging, to act. This motorised actuator can be in the form of a robot with a restricted area of movement to avoid the risk of accidents, or a collaborative robot that with operation in safe mode avoids the risk of accidents due to the transit of people; moreover, as mentioned, said motorised actuator can move along guides thus delimiting its area of action. All this safely allowing an operator to carry out maintenance or adjustment tasks.

According to an alternative non-claimed embodiment, the motorised actuator may be in the form of a movable apparatus, with actuation means in correspondence with positioning means of the support for its positioning reconfiguration according to the orders given by the control means. Thus, the motorised actuator, in this case the movable apparatus, according to the orders received from the control means, moves to the corresponding support, and automatically couples to the same, connecting the actuation means with the positioning means of the support, so that when acting, the support is positioned according to the position of the tool determined for the part.

The movable apparatus may be in the form of a cart with three individually motorised axes and configured to couple to a positioning element corresponding to each of the positioning axes of the positioning support.

According to another alternative embodiment of the invention, the motorised actuator is not movable and is secured in a reconfiguration area, to receive the positioning supports, to couple to them and to act to modify their positioning. In this case, an additional collaborative operator or robot should be in charge of unfastening the corresponding support from the covering machine and taking it to the reconfiguration area to the motorised actuator that, knowing its location in the machine, modifies its positioning based on the orders indicated by the control means.

This configuration allows the operator or robot to perform other tasks while the support is being reconfigured, which reduces reconfiguration times.

According to one aspect of the invention, the motorised actuator, in addition to the change of location and positioning of the support, is configured to uncouple the tool from its support and replace it with another from the tool magazine according to the commands of the control means.

The covering system of the invention allows, in addition to the actuation of the motorised actuator, for an operator, in manual mode, to perform the adjustment tasks once the motorised actuator and/or the control system have disengaged the support. To do so, the system comprises acoustic and/or display means that indicate the changes to be made for the positioning reconfiguration and/or tool change of each support based on the orders given by the control means. This also makes it possible to reduce reconfiguration times and act manually when there is, for example, some type of failure in the motorised actuators.

According to this configuration, according to an alternative embodiment of the movable apparatus in the form of a cart, it can be moved by the action of an operator who moves it to the corresponding support and couples it, based on the orders given by the control means. In addition, it is envisaged that the actuation means are in the form of a manual drill that can be actuated by an operator who connects it with the support positioning means, acting on each axis according to the orders given by the control means through acoustic and/or display means.

According to another aspect of the invention, the control means are configured to record in the memory a manual positioning adjustment of the positioning supports by an experienced operator, and subsequently process it in a future reconfiguration that comprises a part with the same geometry. This allows what is known as the "master touch", in other words, adjustments made by an operator based on their experience for positioning the support. Due to this configuration, subsequent automation is possible without the operator, so that said adjustment can be made in the future, or so that the system, once processed, can indicate it to an operator who does not have the knowledge for unassisted correct positioning. In this way, failures are reduced and material waste is avoided.

Said manual adjustment can be performed by the experienced operator acting directly on the support or by having the system of a manual control device that allows the motorised actuator to be controlled, such as push buttons. Said adjustment will therefore be recorded according to the movements ordered to the motorised actuator by means of the push buttons.

According to an alternative embodiment, when the operator makes the adjustments without the actuator being coupled, or when the system is not able to record the movement of the coupled actuator, it is envisaged that the supports comprise a plurality of sensors configured to detect the positioning adjustments performed in each of the degrees of freedom of the positioning support, such as with the use of encoders that are in communication with the control means for recording and processing said adjustments.

### Description of the figures

Figure 1 shows a schematic front view of a part covering machine according to the system object of the invention.
Figure 2 shows a schematic perspective view of a non-motorised tool positioning support of the state of the art, with the arrows indicating the positioning movements that it allows.
Figure 3 shows a schematic profile view of a non-motorised positioning support according to a practical embodiment of the invention, with movement capture and recording sensors on the movement axes.
Figure 4 shows a profile view of the system object of the invention, where a motorised actuator is shown on a movement guide and in an uncoupled position.
Figure 5 shows a view like that of Figure 4 in which the motorised actuator is coupled to the positioning support.
Figure 6 shows a schematic profile view of a motorised actuator in the form of a movable apparatus with actuation means in correspondence with positioning means of the positioning support.
Figure 7 shows a schematic front view of a practical embodiment in which the motorised actuator is arranged secured in a reconfiguration area.

### Detailed description of the invention

In view of the mentioned figures and in accordance with the adopted numbering, a preferred exemplary embodiment of the invention may be observed therein, which comprises the parts and elements that are indicated and described in detail below.

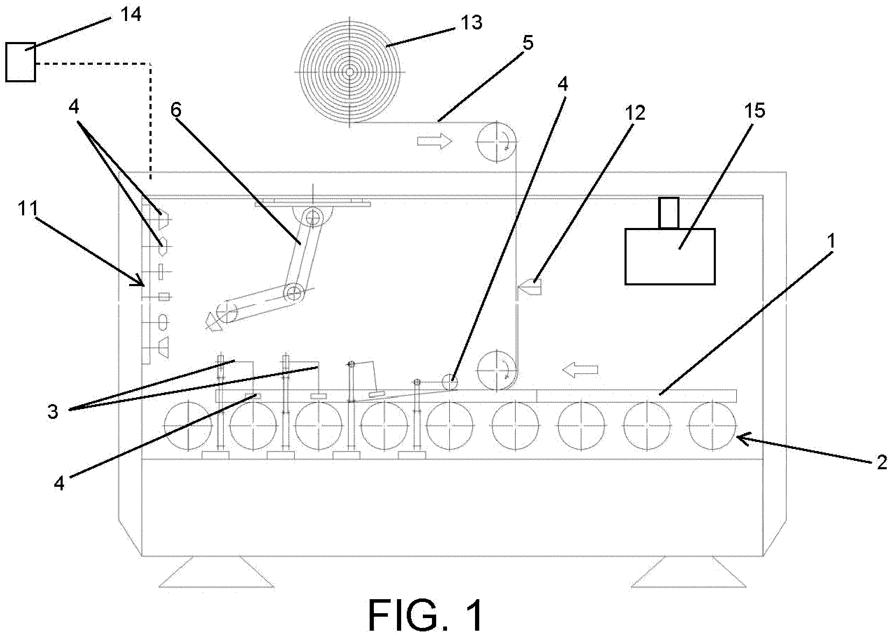

Figure 1 shows the part covering system object of the invention, with a covering machine provided with a plurality of positioning supports (3) arranged along a conveyor (2), on a bed of the covering machine that together form a conveyor path on which the part (1) is going to be coated.

In the conveyor path, the part or profile (1) is conveyed on the conveyor (2) in the direction indicated by the arrow (to the left).

A covering material (5) is extracted in this case from a reel (13), as is conventional for continuous applications. In an application station (12), the adhesive is applied to said material for its subsequent application on the part (1) that moves along the conveyor (2).

The plurality of positioning supports (3) as a whole form a train of supports which positioning configuration, location and tool (4) to be supported are defined by a database stored in a memory of the covering machine according to the part (1) introduced in the machine.

The tool (4) arranged in each support preferably has the shape of a pressure roller, which will have an outer surface configuration in correspondence with the part (1).

Thus, with the forward movement of the part (1) on the conveyor (2), the tools (4) are supported by the positioning supports (3) arranged along the conveyor path so that they gradually extend the covering material over the outer surface of the part (1), adapting it to its shape, proceeding outwards from the centre of the band of said covering material.

However, with the introduction of a new part to be covered with a different geometry, it is necessary to make adjustments according to reconfiguration parameters, adjusting the positioning supports (3) and/or making a change of location of said supports (3) and/or making a change of tool (4).

According to the invention, as can be seen in Figure 1, the system comprises a motorised actuator (6), in the form of a robot, preferably a collaborative robot that can be moved to each positioning support (3), and more preferably can be moved longitudinally in the direction of transport of the part (1) according to a guide (6.1). Said motorised actuator (6) receives orders from control means (14) which, based on the geometry of the new part (1), define the reconfiguration parameters, and indicate to the motorised actuator (6) on which positioner support (3) it has to act. The information about the correspondence for the reconfiguration is stored in a memory of the covering system that is accessed by the control means (14) to carry out the calculation and determination of the reconfiguration parameters.

In view of the foregoing, the motorised actuator (6) may act to modify the orientation of the tool (4) by modifying the positioning of the positioning support (3), and/or it may change the location of the positioning support (3) to a new, more suitable location for the new geometry, and/or it may replace the tool (4) of the support (3) by taking a new tool (4) from a tool magazine (11), replacing the previous one, and taking the previous tool (4) to its corresponding position in the magazine (11).

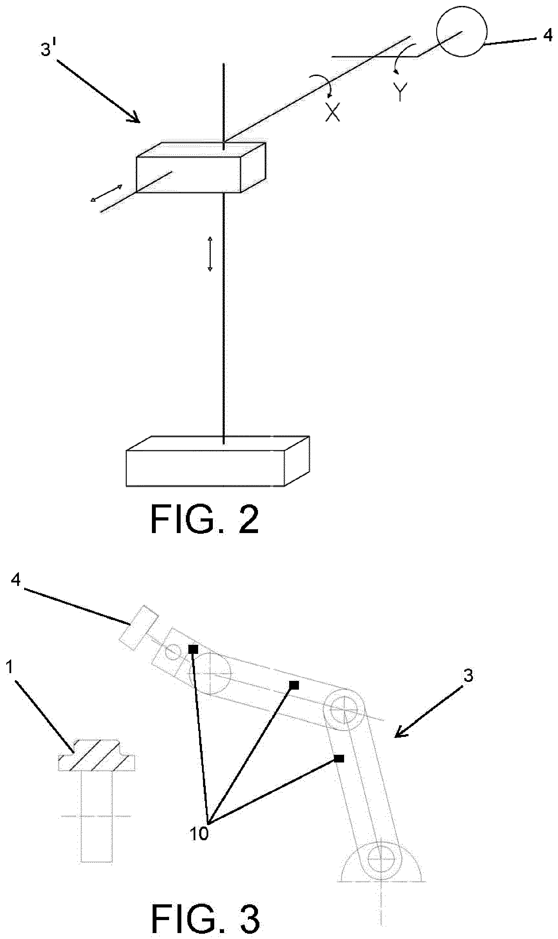

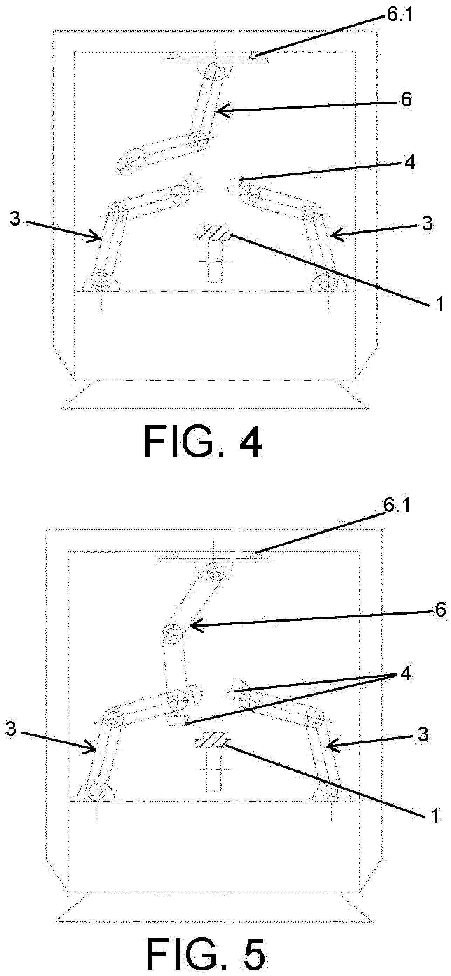

As can be seen in Figure 2, a positioning support of the state of the art (3') for positioning the tool (4) has mobility for its securement along a Z-axis corresponding to the vertical direction; it has mobility along the direction of an X-axis, having rotational mobility along said X axis; it has mobility along the direction of a Y-axis, and with rotational mobility along said Y-axis for precise positioning of the tool (4). These degrees of freedom are those controlled in the positioning support (3) of the invention represented schematically in Figure 4.

Said Figure 4 shows the motorised actuator (6) longitudinally movable along a guide (6.1), in the moments prior to its coupling to the support (3) indicated by the control means (14). Once the motorised actuator (6) is aligned with the support (3) to be reconfigured, as can be seen in Figure 5, said motorised actuator (6) couples to the support (3). Once coupled, it disengages the support (3) so that it can be positioned according to the orders given by the control means (14).

Preferably, each positioning support (3) comprises disengaging means such as, for example, mechanical release means or electromagnetically, pneumatically or hydraulically controlled actuation means. Said disengaging means have the function of locking the positioning support (3) in its position of use, so that, for its unlocking, the motorised actuator (6), for example, mechanically couples to the support (3) with a clutch and disconnects electromagnetic brakes, leaving the support (3) ready for its reconfiguration. After said reconfiguration, the disengaging means will re-lock the support (3) in the new defined position. The motorised actuator (6) will be able to change the tool (4) with a similar clutch.

According to an alternative embodiment, the control means (14) will emit a signal or electrical impulse that acts on the disengaging means, unlocking the positioning support (3) instead of said action being carried out by the motorised actuator (6). Once disengaged, the motorised actuator (6) will act according to the orders given by the control means (14).

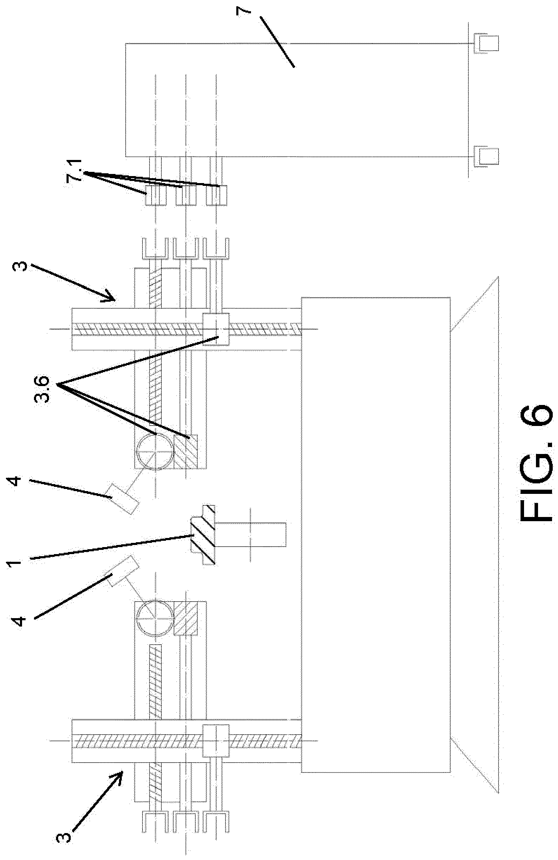

According to an alternative embodiment of the invention, as can be seen in Figure 6, the motorised actuator (7) is a movable apparatus, preferably a cart that can be automatically moved to each positioning support (3). Said cart comprising actuation means (7.1) in correspondence with positioning means (3.6) of the support (3). The actuation means (7.1) will preferably be in the form of motorised rotation axes, preferably three in number, so that they correspond to three positioning means (3.6) configured to receive the rotation of the actuation means (7.1). and position the tool (4). Thus, a first rotation axis of the actuation means (7.1) will be inserted in a first positioning means (3.6) so that with a worm gear mechanism it moves the support in the X direction, a second rotation axis will be inserted in a second positioning means (3.6) so that with a worm gear mechanism it moves the support in the Z direction, and a third rotation axis rotates a third positioning means that rotates the tool along a Y-axis.

According to an alternative embodiment, said movable cart will be movable by an operator to the corresponding support (3), so that the actuation means (7.1) can act according to the orders given by the control means (14).

According to another alternative embodiment, the actuation means (7.1) will be in the form of a manual drill that can be operated by the operator, so that according to the orders given by the control means (14), the operator acts on the positioning means (3.6) in the corresponding axes, indicating to the control means (14) when the positioning movement has finished, and awaits the next order.

Both this motorised actuator (7) in the form of a cart and the motorised actuator (6) corresponding to a robot can consist of a single actuator, or have one on each side of the conveyor (2) to act on the row of corresponding positioning supports (3).

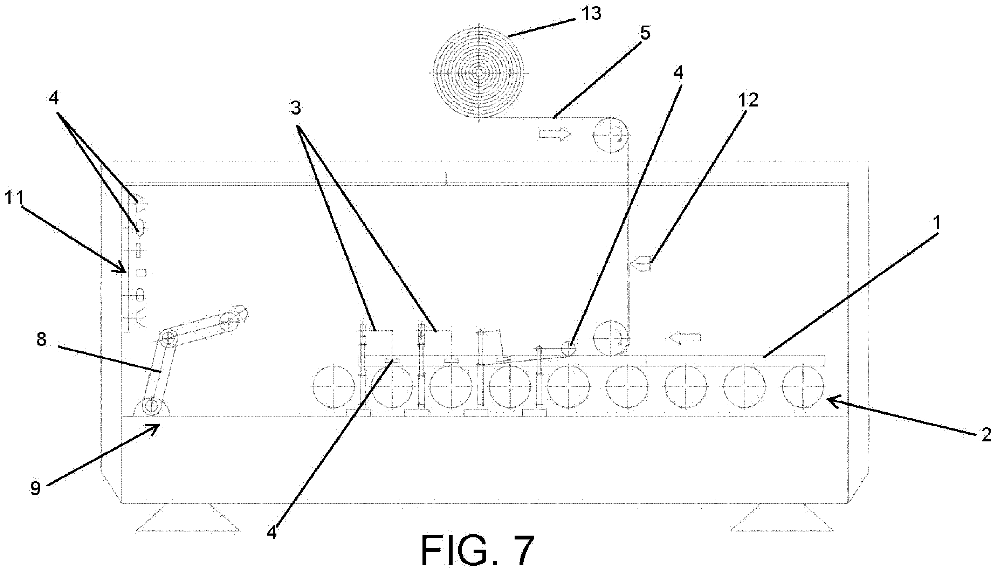

According to another alternative embodiment, according to Figure 7, it is envisaged that the motorised actuator (8) is securely arranged in a reconfiguration area (9). Thus, when it is necessary to reconfigure a positioning support (3), an operator is in charge of uncoupling the positioning support (3) that is locked according to a positioning, then once the positioning support (3) is available in the reconfiguration area (9), the motorised actuator (8) couples to it and disengages, acts on it by changing its positioning according to the orders given by the control means (14), and it is re-engaged. As in the previous embodiments, it is also contemplated that the motorised actuator (8) can replace the tool (4). Once reconfigured, the operator can return the positioning support (3) to its previous location or to a new location to secure it. It is also contemplated that the tasks performed for this case by the operator can be performed by a robot. It is also contemplated that the operator can carry out the reconfiguration tasks once the support (3) has been disengaged according to the orders given by the control means (14).

According to another aspect of the invention, it is envisaged that the system comprises acoustic and/or display means (15), for example, a screen like the one represented in Figure 1, which indicate the changes to be made for the positioning reconfiguration and/or change of location and/or change of tool (4) of each positioning support (3) by an operator. To do this, the motorised actuator (6, 7, 8) first couples to and disengages the support (3) or the support (3) is simply disengaged by the control means (14) without the need for coupling the motorised actuator (6, 7, 8). Thus, the operator can act on the support (3), following the instructions on the screen (15) that will show the orders given by the control means (14) based on the new geometry of the part (1) introduced, and once the changes have been made, the support (3) will re-engage. It is also envisaged that in an exemplary embodiment of the invention, the display means use augmented reality to show the operator the changes to be made, so that through augmented reality software, according to the orders given by the control means (14), the movements to be carried out to obtain the required reconfiguration are shown on a screen.

There are occasions in which the reconfiguration parameters given by the control means (14) are not completely correct, which could cause failures in the application of the covering such as unwanted folds or simply said reconfiguration parameters, even if they are correct, can be improved, achieving better results. To solve these defects or to make an improvement, it is envisaged that the positioning support (3) can be adjusted by an experienced operator applying what is known as the "master touch", where, based on their experience, they perform the necessary adjustments for a correct application of the covering by the tool (4). Thus, according to a practical embodiment of the invention, the control means (14) are configured to record said manual adjustment in the memory of the machine, and process it so that when a part (1) with the same geometry is reintroduced in the future, the adjustment errors are corrected.

It is also envisaged that the system comprises software that determines the reconfiguration parameters according to a part (1) geometry, preferably introduced through a CAD, which is not in the memory of the machine, so that to perform this calculation the master touch settings stored in memory will also be taken into account.

In addition, it is envisaged that the system comprises a tool (4) wear recognition system, such as sensors, which determines the wear produced and these wear parameters are taken into account by the previous software to calculate the reconfiguration parameters.

According to an exemplary embodiment, the master touch can be performed by an operator, once the motorised actuator (6, 7, 8) has been coupled and the support (3) has been disengaged, with a control device such as push buttons, in such a way that it controls the positioning movements of the support (3). These pulsation movements will be recorded by the control means (14) so that said information can be used to determine the adjustment made.

According to another exemplary embodiment, the operator performs the master touch when the actuator (6, 7, 8) is coupled and has disengaged the support (3), so that when the actuator (6, 7, 8) is coupled, the control means (14) can determine the adjustments made between the initial and final position.

According to an additional exemplary embodiment, the operator acts directly on the support (3), after disengaging it through a signal emitted by the control means (14), to perform the master touch without the actuator (6, 7, 8) being coupled. In this case, the positioning supports (3) comprise a plurality of sensors (10), for example, encoders, which record the positioning of the tool (4) by detecting the positioning adjustments made on the support (3), and send said information to the control means (14).

All these features of the part covering system object of the invention have the objective of automating the covering process, reducing time and eliminating errors, while also allowing an operator to act safely. Furthermore, a system is obtained that is much more economical than the known solutions in which several motorised robotic supports are used.

## Claims

1. A part coating system comprising a conveyor (2) that longitudinally conveys the parts (1) to be covered, comprising a plurality of non-motorised positioning supports (3) in which at least one pressure tool (4) is arranged that presses a covering material (5) onto the part to be covered on its path on the conveyor (2) according to an orientation of the predefined pressure tool (4) based on the geometry of the part (1),
the system comprising a memory with the correspondence between geometry of the part (1) and the type of tool (4) and positioning of each positioning support (3) for orientation of the tool (4), and with control means (14) that determine the positioning of each positioning support (3) for its reconfiguration when a part (1) to be covered with a different geometry is introduced,
**characterised in that** it comprises at least one motorised actuator (6, 8) that can be connected to the plurality of positioning supports (3), and configured to couple to the corresponding positioning support (3), disengage it and, once disengaged, act for its reconfiguration based on the orders given by the control means (14) according to the geometry of the part (1) to be covered,
wherein the plurality of positioning supports (3) comprise disengaging means that can be actuated by the motorised actuator (6, 8) and/or by a signal emitted by the control means (14), for its disengagement and for locking the positioning supports (3) in its position of use,
wherein the disengaging means are in the form of electromagnetic brakes associated with the positioning support (3), that can be disconnected with the motorised actuator (6, 8) once mechanically coupled to the positioning support (3) with a clutch of the motorised actuator (6, 8), for the reconfiguration of the positioning support (3), and
wherein the motorised actuator (6, 8) is further configured for the change of the tool (4) via the clutch.

2. The part coating system according to the preceding claim, wherein the motorised actuator (6) can be moved to each of the positioning supports (3) for its positioning reconfiguration and/or change of location according to the orders given by the control means (14).

3. The part coating system according to claim 1, wherein the motorised actuator (8) is arranged secured in a reconfiguration area (9) being configured to receive the positioning supports (3), couple to them and modify their positioning.

4. The part coating system according to any one of the preceding claims, wherein the motorised actuator (6, 8) is configured to replace the tool (4) with another from the magazine (11) according to the orders given by the control means (14).

5. The part coating system according to any one of the preceding claims, which comprises acoustic and/or display means (15) that indicate the changes to be made for the positioning reconfiguration and/or change of tool (4) of each positioning support (3) by an operator when the motorised actuator (6, 8) and/or the control means (14) have disengaged the corresponding support (3), said acoustic and display means (15) being controlled by the control means (14).

6. The part coating system according to any one of the preceding claims, wherein the control means (14) are configured to record in the memory a manual positioning adjustment of the plurality of positioning supports (3) by an experienced operator, and process it in a subsequent reconfiguration according to the geometry of the part (1) to be covered.

7. The part coating system according to claim 5, wherein it comprises a manual control device that allows controlling the motorised actuator (6, 8) for the manual positioning adjustment of the plurality of positioning supports (3), so that the control means (14) are configured to record said adjustment by recording the movements of the motorised actuator (6, 8).

8. The part coating system according to claim 5 or 6, wherein the plurality of positioning supports (3) comprises a plurality of sensors (10) configured to detect the positioning adjustments made on the positioning support (3).

## Patentansprüche

1. Teilbeschichtungssystem, umfassend ein Förderband (2), welches die Teile (1), welche abgedeckt werden sollen, longitudinal fördert, umfassend eine Mehrzahl nicht motorisierter Positionierstützen (3), in welchen wenigstens ein Druckwerkzeug (4) angeordnet ist, welches ein Abdeckmaterial (5) auf das Teil, welches abgedeckt werden soll, auf seine Bahn auf dem Förder-band (2) gemäß einer Orientierung des vordefinierten Druckwerkzeugs (4) basierend auf der Geometrie des Teils (1) drückt,
wobei das System einen Speicher umfasst mit der Zuordnung zwischen einer Geometrie des Teils (1) und des Typs des Werkzeugs (4) und einer Positionierung jeder Positionierstütze (3) für eine Orientierung des Werkzeugs (4), und mit Steuermitteln (14), welche die Positionierung jeder Positionierstütze (3) für ihre Rekonfiguration bestimmen, wenn ein Teil (1), welches abgedeckt werden soll, mit einer unterschiedlichen Geometrie eingeführt wird,
**dadurch gekennzeichnet, dass** es wenigstens einen motorisierten Aktuator (6, 8) umfasst, welcher mit der Mehrzahl von Positionierstützen (3) verbunden werden kann und dazu eingerichtet ist, mit der entsprechenden Positionierstütze (3) zu koppeln, diese zu entkoppeln und, sobald entkoppelt, für seine Rekonfiguration gemäß den Anweisungen, welche von den Steuermitteln (14) gegeben werden, entsprechend der Geometrie des Teils (1), welches abgedeckt werden soll, zu wirken,
wobei die Mehrzahl von Positionierstützen (3) Entkopplungsmittel um-fasst, welche durch den motorisierten Aktuator (6, 8) und/oder durch ein Signal, welches von den Steuermitteln (14) gesendet wird, betätigt werden können, für seine Entkopplung und für ein Verriegeln der Positionierstützen (3) in ihre Nutzpositionen,
wobei die Entkopplungsmittel in der Form elektromagnetischer Bremsen sind, welche mit der Positionierstütze (3) verbunden sind, welche mit dem motorisierten Aktuator (6, 8) getrennt werden können, sobald sie mechanisch mit der Positionierstütze (3) mit einer Kupplung des motorisierten Aktuators (6, 8) für die Rekonfiguration der Positionierstütze (3) gekoppelt worden sind, und
wobei der motorisierte Aktuator (6, 8) ferner eingerichtet ist, für die Änderung des Werkzeugs (4) mittels der Kupplung.

2. Teilbeschichtungssystem nach dem vorhergehenden Anspruch, wobei der motorisierte Aktuator (6) zu jeder der Positionierstützen (3) für seine Positionsrekonfiguration und/oder für eine Änderung eines Standorts gemäß den Anweisungen, welche von den Steuermitteln (14) gegeben werden, bewegbar ist.

3. Teilbeschichtungssystem nach Anspruch 1, wobei der motorisierte Aktuator (8) gesichert in einem Rekonfigurationsbereich (9) angeordnet ist, welcher dazu eingerichtet ist, die Positionierstützen (3) aufzunehmen, mit diesen zu koppeln und ihre Positionierung zu modifizieren.

4. Teilbeschichtungssystem nach einem der vorhergehenden Ansprüche, wobei der motorisierte Aktuator (6, 8) dazu eingerichtet ist, das Werkzeug (4) durch ein anderes aus einem Magazin (11) gemäß den Anweisungen, welche von den Steuermitteln (14) gegeben werden, zu ersetzen.

5. Teilbeschichtungssystem nach einem der vorhergehenden Ansprüche, welches Akustik- und/oder Anzeigemittel (15) umfasst, welche die Änderungen anzeigen, welche für die Positionsrekonfiguration und/oder die Werkzeugänderung (4) jeder Positionierstütze (3) durch einen Bediener vorgenommen werden sollen, wenn der motorisierte Aktuator (6, 8) und/oder die Steuermittel (14) die entsprechende Stütze (3) entkoppelt haben, wobei die Akustik- und Anzeigemittel (15) durch die Steuermittel (14) gesteuert werden.

6. Teilbeschichtungssystem nach einem der vorhergehenden Ansprüche, wobei die Steuermittel (14) dazu eingerichtet sind, in dem Speicher eine manuelle Positionsanpassung der Mehrzahl von Positionierstützen (3) durch einen erfahrenen Bediener aufzuzeichnen und diese in einer an-schließenden Rekonfiguration gemäß der Geometrie des Teils (1), welches abgedeckt werden soll, zu verarbeiten.

7. Teilbeschichtungssystem nach Anspruch 5, wobei es eine manuelle Steuereinrichtung umfasst, welche ein Steuern des motorisierten Aktuators (6, 8) für die manuelle Positionsanpassung der Mehrzahl von Positionierstützen (3) ermöglicht, sodass die Steuermittel (14) dazu eingerichtet sind, die Anpassung durch ein Aufzeichnen der Bewegungen des motorisierten Aktuators (6, 8) aufzuzeichnen.

8. Teilbeschichtungssystem nach Anspruch 5 oder 6, wobei die Mehrzahl von Positionierstützen (3) eine Mehrzahl von Sensoren (10) umfasst, welche dazu eingerichtet sind, die Positionsanpassungen zu detektieren, welche an der Positionierstütze (3) vorgenommen werden.

## Revendications

1. Système de revêtement de pièce comprenant un convoyeur (2) qui transporte longitudinalement les pièces (1) à recouvrir, comprenant une pluralité de supports de positionnement (3) non motorisés dans lesquels est agencé au moins un outil de pression (4) qui appuie un matériau de recouvrement (5) sur la pièce à recouvrir sur son chemin sur le convoyeur (2) selon une orientation de l'outil de pression (4) prédéfini sur la base de la géométrie de la pièce (1),
le système comprenant une mémoire avec la correspondance entre la géométrie de la pièce (1) et le type d'outil (4) et le positionnement de chaque support de positionnement (3) pour l'orientation de l'outil (4), et avec des moyens de commande (14) qui déterminent le positionnement de chaque support de positionnement (3) pour sa reconfiguration lorsqu'une pièce (1) à recouvrir avec une géométrie différente est introduite,
**caractérisé en ce qu'**il comprend au moins un actionneur motorisé (6, 8) qui peut être raccordé à la pluralité de supports de positionnement (3), et configuré pour se coupler au support de positionnement (3) correspondant, le désengager et, une fois désengagé, agir pour sa reconfiguration sur la base des ordres donnés par les moyens de commande (14) selon la géométrie de la pièce (1) à recouvrir,
dans lequel la pluralité de supports de positionnement (3) comprennent des moyens de désengagement qui peuvent être actionnés par l'actionneur motorisé (6, 8) et/ou par un signal émis par les moyens de commande (14), pour son désengagement et pour le verrouillage des supports de positionnement (3) dans leur position d'utilisation,
dans lequel les moyens de désengagement sont sous forme de freins électromagnétiques associés au support de positionnement (3), qui peuvent être déconnectés avec l'actionneur motorisé (6, 8) une fois couplé mécaniquement au support de positionnement (3) avec un embrayage de l'actionneur motorisé (6, 8), pour la reconfiguration du support de positionnement (3), et
dans lequel l'actionneur motorisé (6, 8) est en outre configuré pour le changement de l'outil (4) via l'embrayage.

2. Système de revêtement de pièce selon la revendication précédente, dans lequel l'actionneur motorisé (6) peut être déplacé vers chacun des supports de positionnement (3) pour sa reconfiguration de positionnement et/ou son changement d'emplacement selon les ordres donnés par les moyens de commande (14).

3. Système de revêtement de pièce selon la revendication 1, dans lequel l'actionneur motorisé (8) est agencé fixé dans une zone de reconfiguration (9) en étant configuré pour recevoir les supports de positionnement (3), se coupler à ceux-ci et modifier leur positionnement.

4. Système de revêtement de pièce selon l'une quelconque des revendications précédentes, dans lequel l'actionneur motorisé (6, 8) est configuré pour remplacer l'outil (4) par un autre du magasin (11) selon les ordres donnés par les moyens de commande (14).

5. Système de revêtement de pièce selon l'une quelconque des revendications précédentes, qui comprend des moyens acoustiques et/ou d'affichage (15) qui indiquent les changements à effectuer pour la reconfiguration de positionnement et/ou le changement d'outil (4) de chaque support de positionnement (3) par un opérateur lorsque l'actionneur motorisé (6, 8) et/ou les moyens de commande (14) ont désengagé le support (3) correspondant, lesdits moyens acoustiques et d'affichage (15) étant commandés par les moyens de commande (14).

6. Système de revêtement de pièce selon l'une quelconque des revendications précédentes, dans lequel les moyens de commande (14) sont configurés pour enregistrer dans la mémoire un réglage de positionnement manuel de la pluralité de supports de positionnement (3) par un opérateur expérimenté, et le traiter dans une reconfiguration ultérieure selon la géométrie de la pièce (1) à recouvrir.

7. Système de revêtement de pièce selon la revendication 5, dans lequel il comprend un dispositif de commande manuelle qui permet de commander l'actionneur motorisé (6, 8) pour le réglage de positionnement manuel de la pluralité de supports de positionnement (3), de sorte que les moyens de commande (14) soient configurés pour enregistrer ledit réglage en enregistrant les mouvements de l'actionneur motorisé (6, 8).

8. Système de revêtement de pièce selon la revendication 5 ou 6, dans lequel la pluralité de supports de positionnement (3) comprend une pluralité de capteurs (10) configurés pour détecter les réglages de positionnement effectués sur le support de positionnement (3).
